(19)

Europäisches
Patentamt
European
Patent Office
Office européen
des brevets

(11) **EP 2 660 965 A1**

(12) **EUROPEAN PATENT APPLICATION**
published in accordance with Art. 153(4) EPC

(43) Date of publication:
**06.11.2013 Bulletin 2013/45**

(21) Application number: **10861318.3**

(22) Date of filing: **27.12.2010**

(51) Int Cl.:
*H02M 7/48* *(2007.01)*

(86) International application number:
**PCT/JP2010/007537**

(87) International publication number:
**WO 2012/090237 (05.07.2012 Gazette 2012/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Hitachi, Ltd.**
**Tokyo 100-8280 (JP)**

(72) Inventors:
• **TAMURA, Hiroshi**
**Hitachi-shi**
**Ibaraki 319-1292 (JP)**

• **AJIMA, Toshiyuki**
**Hitachi-shi**
**Ibaraki 319-1292 (JP)**

(74) Representative: **MERH-IP**
**Matias Erny Reichl Hoffmann**
**Paul-Heyse-Strasse 29**
**80336 München (DE)**

(54) **ELECTRIC POWER CONVERTER**

(57)    Provided is a power converting apparatus which suppresses noise caused by a square wave voltage that is sharply changed according to switching of the power converting apparatus.

The invention has a power converting apparatus including a first inverter circuit connected to a DC power supply side; and a second inverter circuit connected to a load side, wherein the first inverter circuit converts DC power from the DC power supply into power having an absolute waveform of an AC waveform, and the second inverter circuit converts the power of the absolute waveform every single cycle thereof into AC power by alternately inverting the power.

[FIG. 1]

EP 2 660 965 A1

**Description**

Technical Field

The present invention relates to a power converting apparatus which connects a DC power supply to a power system or a load.

Background Art

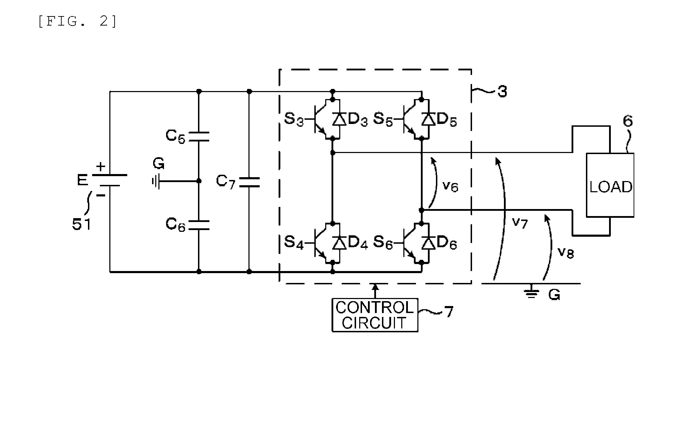

A power converting apparatus which receives DC power, converts the DC power into AC power, and outputs the AC power to a load (a rotary electric machine or the like) includes a plurality of switching elements, and converts the supplied DC power into the AC power as the switching elements repeat switching operations. A general single-phase power converting apparatus which converts DC power into AC power is illustrated in Fig. 2. As illustrated in Fig. 2, the power converting apparatus is configured by connecting a DC power supply E to the input side of a single-phase inverter 3 and connecting a load to the output side of the single-phase inverter 3, and in order to control AC power supplied to the load, turns on or off switching elements on the basis of a PWM switching signal from a control circuit 7. The AC power is output to the load on the basis of an output voltage $v_6$ controlled as above.

However, in a method of controlling the switching elements on the basis of the above-mentioned PWM switching signal, the output voltage $v_6$ generates noise base on a square wave-like voltage including a surge voltage or ringing, that is, a sharply changing voltage. Therefore, due to stray capacitances between the single-phase inverter 3 and a housing 18, leakage current flows and generates noise that affects other devices existing in the periphery of the power converting apparatus. It is known that the noise is a factor of dielectric breakdown of a motor or a reactor or malfunction of electronic devices, and thus there is a demand for a power converting apparatus that suppresses noise.

An example of a power converting apparatus for the purpose of suppressing noise due to a surge voltage or ringing is disclosed in JP-A-2000-295857 (PTL 1).

A circuit described in PTL 1 is illustrated in Fig. 3. In PTL 1, a power converting apparatus in which an LC filter circuit 8 constituted by an inductor and a capacitor is disposed between a load 6 and a single-phase inverter circuit 3 is disclosed. It is possible for the LC filter circuit 8 to suppress noise in a high frequency band based on a surge voltage output to a motor or ringing. However, in the circuit described in PTL 1, noise in a low frequency band cannot be suppressed.

Citation List

Patent Literature

[PTL 1] JP-A-2000-295857

Summary of Invention

Technical Problem

An object of the invention is to provide a power converting apparatus which reduces noise caused by a sharply changing voltage and thus reduces power consumption. Solution to Problem

In order to solve the problems, the invention provides a power converting apparatus including: a first inverter circuit connected to a DC power supply side; and a second inverter circuit connected to a load side, wherein the first inverter circuit converts DC power from the DC power supply into power having an absolute waveform of an AC waveform, and the second inverter circuit converts the power of the absolute waveform every single cycle thereof into AC power by alternately inverting the power.

Advantageous Effects of Invention

According to the invention, the power converting apparatus which reduces noise caused by a sharply changing voltage and thus reduces power consumption may be provided. Brief Description of Drawings

Fig. 1 illustrates a power converting apparatus that represents a first example of the invention.
Fig. 2 illustrates a general power converting apparatus which converts DC power into AC power.

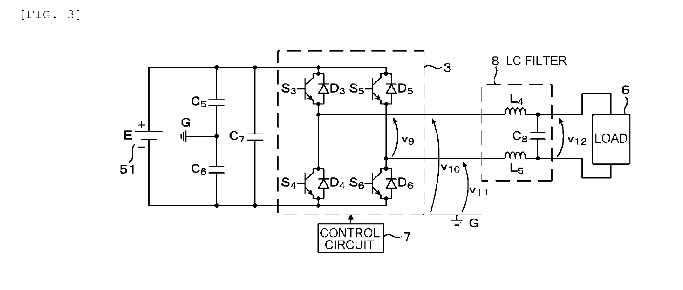

Fig. 3 illustrates a general power converting apparatus which suppresses noise.

Fig. 4 illustrates a control waveform of a capacitor voltage $v_1$ of a bidirectional buck-boost chopper part.

Fig. 5 is a schematic diagram of switching signals $S_{1S}$ and $S_{2S}$ of the bidirectional buck-boost chopper.

Fig. 6 is a control block diagram of the bidirectional buck-boost chopper.

Fig. 7 illustrates operation modes of the bidirectional buck-boost chopper.

Fig. 8 illustrates a waveform of a capacitor voltage $v_2$ of a low-pass filter part.

Fig. 9 is a schematic diagram of switching signals $S_{3S}$, $S_{4S}$, $S_{5S}$, and $S_{6S}$ of a single-phase inverter and an output voltage $v_3$.

Fig. 10 is a control block diagram of the single-phase inverter.

Fig. 11 illustrates a mechanism for generating a leakage current $i_{leakx}$ which is a factor of noise.

Fig. 12 illustrates voltage waveforms of corresponding parts of the general power converting apparatus which converts the DC power into the AC power.

Fig. 13 illustrates voltage waveforms of corresponding parts of the power converting apparatus that represents the first example of the invention.

Fig. 14 illustrates a power converting apparatus that represents a second example of the invention.

Fig. 15 illustrates a power converting apparatus that represents a third example of the invention.

Fig. 16 is a schematic diagram of a system in which the power converting apparatus that represents the third example of the invention is applied to an EV.

Fig. 17 illustrates a power converting apparatus that represents a fourth example of the invention.

Description of Embodiments

An embodiment of the invention will be described with reference to the drawings.

[First Example]

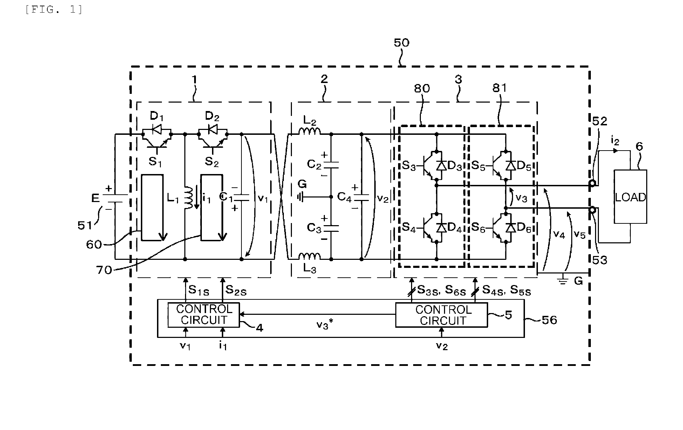

A power converting apparatus 50 according to a first embodiment is illustrated in Fig. 1. Fig. 1 illustrates the power converting apparatus 50 for operating a fan and a pump. The power converting apparatus 50 is constituted by a bidirectional buck-boost chopper 1, a low-pass filter 2, a single-phase inverter 3, a control circuit 4 that controls conduction and shutoff of switching elements $S_i$ and $S_2$ of the bidirectional buck-boost chopper 1, and a control circuit 5 that controls conduction and shutoff of switching elements $S_3$, $S_4$, $S_5$, and $S_6$ of the single-phase inverter 3. In addition, the control circuit 4 and the control circuit 5 may be separately configured, or may also be configured as a single control circuit 56. The switching elements $S_3$ and $S_5$ of the single-phase inverter 3 constitute the upper arm of an inverter circuit, and the switching elements $S_4$ and $S_6$ of the single-phase inverter 3 constitute the lower arm of the inverter circuit. The bidirectional buck-boost chopper 1 is constituted by the switching elements $S_1$ and $S_2$, diodes $D_1$ and $D_2$, an inductor $L_1$, and a capacitor $C_1$. For example, in a case where NPN-type IGBTs are used as the switching elements $S_1$ and $S_2$, a configuration in which the high potential side of a DC power supply 51 is connected to the collector side of the switching element $S_1$ and the cathode side of the diode $D_1$, the emitter side of the switching element $S_1$ and the anode side of the diode $D_1$ are connected to the collector side of the switching element $S_2$, the cathode side of the diode $D_2$, and one terminal of the inductor $L_1$, the emitter side of the switching element $S_2$ and the anode side of the diode $D_2$ are connected to the low potential side of the capacitor $C_1$, and the high potential side of the capacitor $C_1$ is connected to the other terminal of the inductor $L_1$ and the low potential side of the DC power supply E is made. In a case where PNP-type IGBTs are used as the switching elements $S_1$ and $S_2$, all the components are connected to have reverse polarities.

Conduction and shutoff of the switching elements $S_1$ and $S_2$ is controlled by the control circuit 4, thereby controlling a voltage $v_3$ of the capacitor $C_1$.

The low-pass filter 2 is constituted by inductors $L_2$ and $L_3$ and capacitors $C_2$, $C_3$, and $C_4$. A configuration in which the high potential side of the capacitor $C_1$ is connected to one terminal of the inductor $L_2$, the other terminal of the inductor $L_2$ is connected to the high potential sides of the capacitors $C_2$ and $C_4$, the low potential side of the capacitor $C_4$ is connected to the low potential side of the capacitor $C_3$ and one terminal of the inductor $L_3$, the high potential side of the capacitor $C_3$ is connected to the low potential side of the capacitor $C_2$ and a ground G, and the other terminal of the inductor $L_3$ is connected to the low potential side of the capacitor $C_1$ is made.

The single-phase inverter 3 is constituted by the switching elements $S_3$, $S_4$, $S_5$, and $S_6$ and diodes $D_3$, $D_4$, $D_5$, and $D_6$. For example, when NPN-type IGBTs are used as the switching elements $S_3$, $S_4$, $S_5$, and $S_6$, a configuration in which the high potential side of the capacitor $C_4$ is connected to the collector sides of the switching elements $S_3$ and $S_5$ and the cathode sides of the diodes $D_3$ and $D_5$, the emitter side of the switching element $S_3$ and the anode side of the diode $D_3$ are connected to the collector side of the switching element $S_4$, the cathode side of the diode $D_4$, and one terminal of a load, the emitter side of the switching element $S_5$ and the anode of the diode $D_5$ are connected to the collector side of the switching element $S_6$, the cathode side of the diode $D_6$, and the other terminal of the load, and the emitter side of the switching element $S_6$ and the anode side of the diode $D_6$ are connected to the emitter side of the

switching element $S_4$, the anode side of the diode $D_4$, and the low potential side of the capacitor $C_4$ is made.

Conduction and shutoff of the switching elements $S_3$, $S_4$, $S_5$, and $S_6$ is controlled by the control circuit 5, thereby controlling an AC power output to the load.

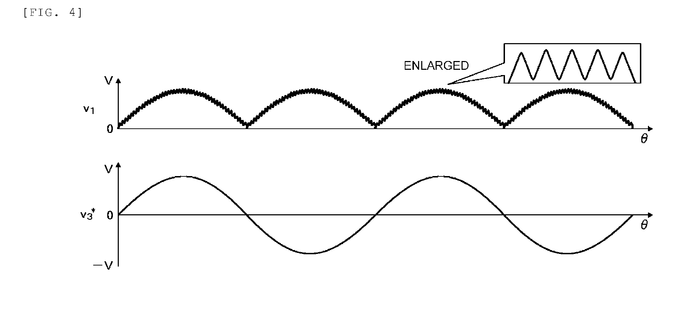

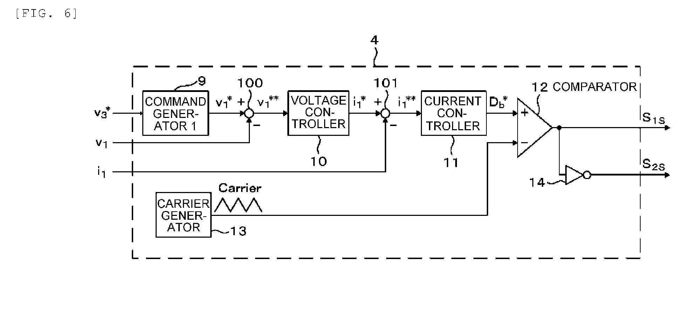

Subsequently, using Figs. 4 to 7, a method of controlling a capacitor voltage $v_1$ will be described. Fig. 6 is a control block diagram of the control circuit 4. To the control circuit 4, a current $i_1$ that flows to the inductor $L_1$, the voltage $v_1$ applied to the capacitor $C_1$, and an output voltage command $v_3^*$ for controlling a voltage output to the load from the single-phase inverter 3 are input. The current $i_1$ that flows to the inductor $L_1$ is a current value detected by a resistor (not shown) for current detection connected to the inductor $L_1$ in series, and the voltage $v_1$ applied to the capacitor $C_1$ is a voltage value detected on the basis of the voltage of a resistor (not shown) connected to the capacitor $C_1$ in parallel. In addition, regarding a current detection method, using a current sensor may be considered. A command generator 9 calculates the absolute value $|v_3^*|$ of the sine wave output voltage command $v_3^*$ to be output to a comparator 100 as a capacitor command voltage $v_1^*$. The comparator 100 compares the capacitor command voltage $v_1^*$ to the voltage $v_1$ applied to the capacitor $C_1$, and calculates a deviation $v_1^{**}$ to be output to a voltage controller 10. The voltage controller 10 calculates an inductor current command $i_1^*$ to follow the capacitor command voltage $v_1^*$ on the basis of the deviation $v_1^{**}$ so as to be output to a comparator 101. The comparator 101 compares the inductor current command $i_1^*$ to the inductor current command $i_1$, and calculates a deviation $i_1^{**}$ to be output to a current controller 11. The current controller 11 calculates a duty command signal $D_b^*$ for determining conduction widths of the switching elements $S_1$ and $S_2$ to cause the current $i_1$ that flows to the inductor $L_1$ to follow the inductor current command $i_1^*$ so as to be output to a comparator 12. The comparator 12 compares the duty command signal $D_b^*$ to a carrier signal having a predetermined frequency, which is generated by a carrier generator 13, and outputs a switching signal $S_{1S}$ for controlling conduction and shutoff of the switching element to the gate of the switching element $S_1$ and an inverting circuit 14. More specifically, in a case where the duty command signal $D_b^*$ is greater than the carrier signal, a signal for turning on the switching element $S_1$ of the bidirectional buck-boost chopper 1 and a signal for turning off $S_2$ are generated, and in a case where the duty command signal $D_b^*$ is smaller than the carrier signal, a signal for turning on the switching element $S_1$ of the bidirectional buck-boost chopper and a signal for turning off $S_2$ are generated. The inverting circuit 14 inverts the switching signal $S_{1S}$ so as to be output to the gate of the switching element $S_2$ as a switching signal $S_{2S}$. By performing the above-described control, the AC voltage having the absolute waveform as illustrated in Fig. 4 is stored in the capacitor $C_1$. In addition, a cycle from when the voltage stored in the capacitor $C_1$ becomes substantially 0 until the voltage becomes substantially 0 subsequent thereto is referred to as 1 cycle of the AC voltage of the absolute value waveform.

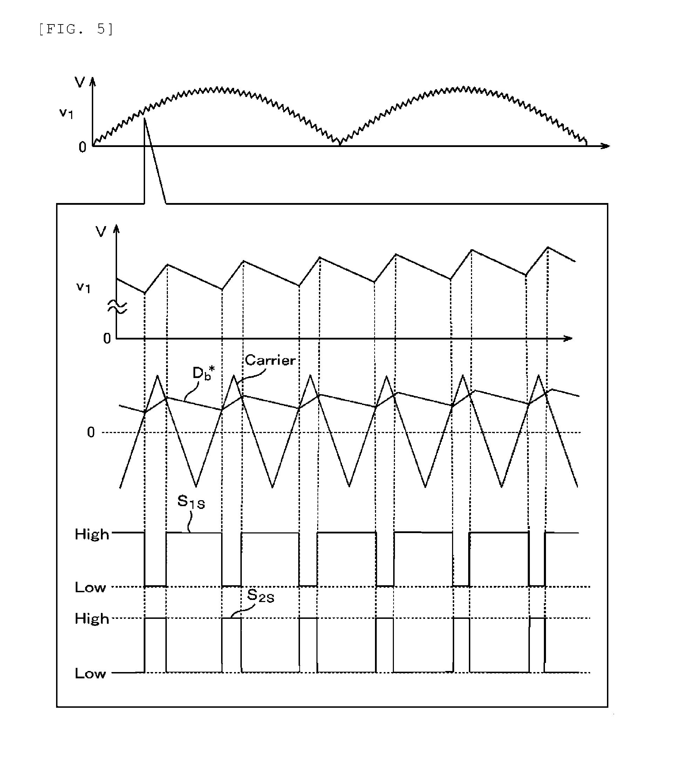

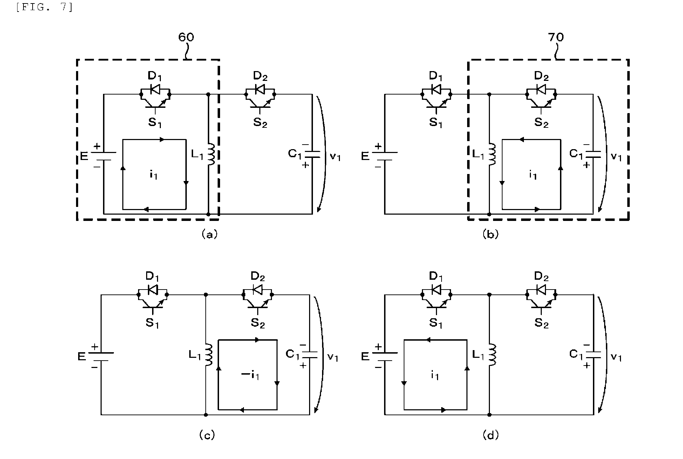

The principle that the voltage of the capacitor $C_1$ becomes the absolute value waveform of a sine wave-like AC wave will be described using Figs. 5 and 7.

First, the principle of increasing the voltage of the capacitor $C_1$ will be described using Fig. 7. There is an operation mode of the bidirectional buck-boost chopper controlled on the basis of the switching signals $S_{1S}$ and $S_{2S}$ of the switching elements $S_1$ and $S_2$ of the above-described bidirectional buck-boost chopper 1. At the time of increasing the capacitor voltage $v_1$ of the bidirectional buck-boost chopper part, as illustrated in Fig. 7(a), the switching element $S_1$ is turned on, and the inductor current $i_1$ is allowed to flow through a loop closed by the DC power supply E, the switching element $S_1$, and the inductor $L_1$ such that magnetic energy is accumulated in the inductor $L_1$. Thereafter, as illustrated in Fig. 7(b), by turning off the switching element $S_1$, there is a transition to a mode in which the inductor current $i_1$ flows to the capacitor $C_1$ from the inductor $L_1$ via the diode $D_2$. Accordingly, the magnetic energy accumulated in the inductor $L_1$ is absorbed by the capacitor $C_1$, thereby increasing the capacitor voltage $v_1$. The capacitor voltage $v_1$ may be set to be greater than the voltage of the DC power supply E by the bidirectional buck-boost chopper.

On the other hand, at the time of decreasing the capacitor voltage $v_1$ of the bidirectional buck-boost chopper part, as illustrated in Fig. 7(c), the switching element $S_2$ is turned on, and an inductor current $-i_1$ is allowed to flow through a loop closed by the capacitor $C_1$, the inductor $L_1$, and the switching element $S_2$ such that magnetic energy is accumulated in the inductor $L_1$. Thereafter, as illustrated in Fig. 7(d), by turning off the switching element $S_2$, there is a transition to a mode in which the inductor current $-i_1$ flows to the DC power supply E from the inductor $L_1$ via the diode $D_1$. Accordingly, the energy accumulated in the inductor $L_1$ is absorbed by the DC power supply E. That is, this means that the energy accumulated in the capacitor $C_1$ is regenerated in the DC power supply E, thereby decreasing the capacitor voltage $v_1$. Here, in order to prevent a short circuit current from flowing, the switching elements $S_1$ and $S_2$ are prohibited from being simultaneously turned on. Fig. 5 illustrates a method of writing conduction timings of the switching elements $S_1$ and $S_2$, and the relationship between the conduction timings of the switching elements $S_1$ and $S_2$ and the voltage of the capacitor $C_1$. The control circuit 4 calculates the duty command signal $D_b^*$ that has the absolute waveform of the sine wave-like AC wave on the basis of the sine wave output voltage command $v_3^*$ for controlling the switching elements $S_3$, $S_4$, $S_5$, and $S_6$ of the single-phase inverter 3. The switching signals $S_{1S}$ and $S_{2S}$ of the switching elements $S_1$ and $S_2$ are determined by the comparison between the duty command signal $D_b^*$ and the carrier signal. Specifically, in a case where the duty command signal $D_b^*$ is greater than the carrier signal, a signal for turning on the switching element $S_1$ of the bidirectional buck-boost chopper and a signal for turning off $S_2$ are generated, and in a case where the duty command signal $D_b^*$ is smaller than the carrier signal, a signal for turning on the switching element $S_1$ of the bidirectional buck-boost chopper and a signal for turning off $S_2$ are generated.

Fig. 5 also illustrates an enlarged diagram of a form at the time of increasing the voltage of the capacitor $C_1$. At the time of increasing the voltage, the conduction width of the switching element $S_1$ is large, and energy stored in the inductor $L_1$ is increased. When the switching element $S_1$ is shut off, the energy stored in the inductor $L_1$ flows to the capacitor $C_1$. Here, in a period in which the switching element $S_1$ is shut off, the switching element $S_2$ is also conducting. However, since the energy stored in the inductor $L_1$ is large, current flows in a direction illustrated in Fig. 7 (b). Therefore, even though the switching element $S_2$ is conducting, a current flow as illustrated in Fig. 7(c) does not occur, and the capacitor voltage $v_1$ is increased. That is, whether to increase or decrease the capacitor voltage $v_1$ is determined by whether or not the energy stored in the inductor $L_1$ is large. The energy stored in the inductor $L_1$ is controlled by the duty command signal $D_b{}^*$.

The capacitor voltage $v_1$ of the bidirectional buck-boost chopper 1 controlled on the basis of the above-described operations becomes a sharp waveform including a high frequency component in a switching frequency band of the bidirectional buck-boost chopper 1. The low-pass filter 2 illustrated in Fig. 1 may not be included. However, in order to further reduce noise, it is preferable that the bidirectional buck-boost chopper 1 and the single-phase inverter 3 be connected with the low-pass filter 2. In a case where the low-pass filter 2 is not included, the positive pole side of the capacitor $C_1$ included in the bidirectional buck-boost chopper 1 is connected to the positive pole side of the single-phase inverter 3, and the negative pole side of the capacitor $C_1$ is connected to the negative pole side of the single-phase inverter 3.

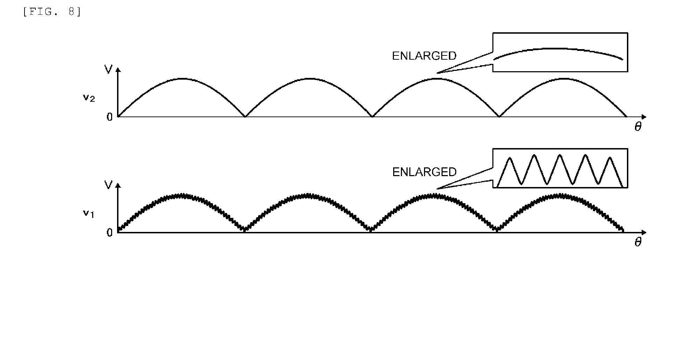

Fig. 8 illustrates a waveform of the capacitor voltage $v_2$ of the low-pass filter 2. The capacitor voltage $v_2$ of the low-pass filter 2 becomes a waveform obtained by attenuating a high frequency component from the capacitor voltage $v_1$ of the bidirectional buck-boost chopper 1 by the low-pass filter 2. A frequency band capable of being attenuated may be determined by Expression (1) depending on a cutoff frequency $f_c$ of the low-pass filter 2. It is preferable that a low-pass filter 2 capable of deleting a high frequency component to be deleted depending on the application be used.

[Expression 1]

$$f_c = \frac{1}{2\pi\sqrt{(L_2+L_3)\left\{C_4+\left(\dfrac{C_2 C_3}{C_2+C_3}\right)\right\}}} \quad \cdots \quad (1)$$

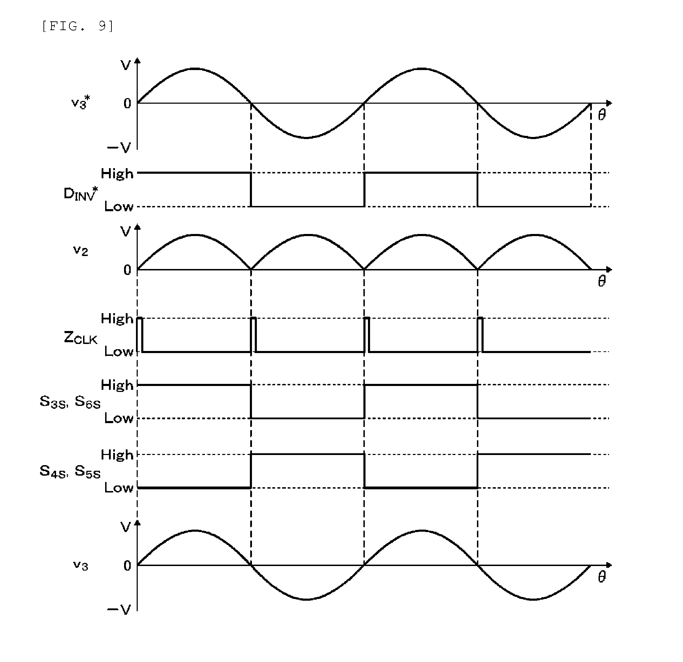

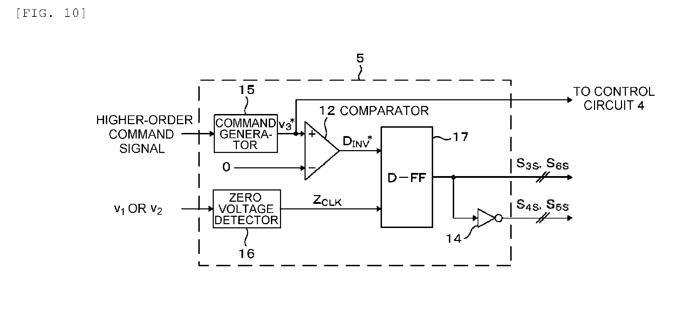

A control method of controlling the single-phase inverter 3 will be described using Figs. 9 and 10. Fig. 10 is a control block diagram of the control circuit 5 that controls the switching elements $S_3$, $S_4$, $S_5$, and $S_6$ included in the single-phase inverter 3. To the control circuit 5, a high-order command signal (for example, a voltage command required for a load or a frequency command) output from a high-order controller (not shown) and the voltage $v_2$ of the capacitor $C_2$ included in the low-pass filter 2 are input. In a case where the low-pass filter 2 is not included, the voltage $v_1$ of the capacitor $C_1$ included in the bidirectional buck-boost chopper 1 is input to the control circuit 5. The high-order command signal is input to a command generator 15, and the sine wave output voltage command $v_3{}^*$ is calculated on the basis of the input command signal and is output to the comparator 12. The sine wave output voltage command $v_3{}^*$ and 0 (zero) are input to the comparator 12, and by comparing the sine wave output voltage command $v_3{}^*$ to 0 (zero), a duty command $D_{INV}{}^*$ of the switching elements $S_3$, $S_4$, $S_5$, and $S_6$ of the single-phase inverter is generated. The duty command $D_{INV}{}^*$ is output to a D flip-flop 17. On the other hand, the voltage $v_1$ or the voltage $v_2$ input to the control circuit 5 is input to a zero voltage detector 16, and a clock signal $Z_{CLK}$ for switching a conduction or shutoff timing of the switching elements $S_3$, $S_4$, $S_5$, and $S_6$ in a case where the voltage $v_1$ or the voltage $v_2$ becomes substantially zero is output to the D flip-flop 17. The D flip-flop 17 updates the duty command $D_{INV}{}^*$ of the switching elements $S_3$, $S_4$, $S_5$, and $S_6$ of the single-phase inverter at the time of rising of the clock signal $Z_{CLK}$, and generates switching signals $S_{3S}$ and $S_{6S}$ of the switching elements $S_3$ and $S_6$ of the single-phase inverter to be output to the gates of the switching elements $S_3$ and $S_6$ and a NOT circuit 14. The NOT circuit 14 generates switching signals $S_{4S}$ and $S_{5S}$ of the switching elements $S_4$ and $S_5$ by reversing the input switching signals $S_{3S}$ and $S_{6S}$ so as to be output to the gates of the switching elements $S_4$ and $S_5$.

When the switching elements $S_3$ and $S_6$ of the single-phase inverter are turned on and the switching elements $S_4$ and $S_5$ are turned off, a sine wave voltage $v_3$ on the positive pole side may be output. On the other hand, when the switching elements $S_4$ and $S_5$ of the single-phase inverter are turned on and the switching elements $S_3$ and $S_6$ are turned off, a sine wave voltage $v_3$ on the negative pole side may be output. Here, in order to prevent a short circuit current from flowing, the switching elements $S_3$ and $S_4$ and the switching elements $S_5$ and $S_6$ of the single-phase inverter are prohibited from being simultaneously turned on.

Since the switching elements $S_3$, $S_4$, $S_5$, and $S_6$ of the single-phase inverter are switched at the time when the

capacitor voltage $v_2$ of the low-pass filter 2 is a zero voltage, a surge voltage or ringing may be suppressed, and switching loss may be reduced. Moreover, since switching of the switching elements $S_3$, $S_4$, $S_5$, and $S_6$ of the single-phase inverter is performed every single cycle of the capacitor voltage $v_2$ of the low-pass filter part, the number of switching operations may be reduced, and as a result, switching loss may be reduced.

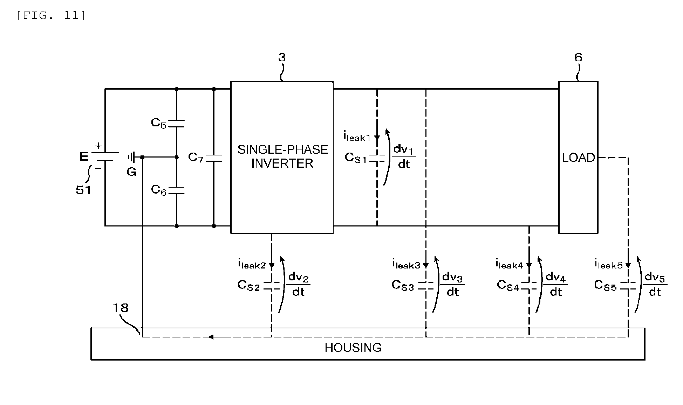

Fig. 11 illustrates a mechanism for generating a leakage current $i_{leak}$ which is a factor of noise. As stray capacitances, there are $C_{S1}$ that is generated between connection lines from the single-phase inverter 3 to the load 6, $C_{S2}$ that is generated between the single-phase inverter 3 and a housing 18 that stores the single-phase inverter 3, the load 6, and the like, $C_{S3}$ that is generated between the high potential side connection line connected from the single-phase inverter 3 to the load 6 and the housing 18, $C_{S4}$ that is generated between the low potential side connection line connected from the single-phase inverter 3 to the load 6 and the housing 18, and $C_{S5}$ that is generated between the load 6 and the housing 18. The leakage current $i_{leak}$ in each part is generated due to a voltage change dv/dt between the stray capacitances $C_S$ that are present in the respective parts and may be expressed by Expression (2).

[Expression 2]

$$i_{leak} = C_S \frac{dv}{dt} \quad \cdots \quad (2)$$

From Expression (2), it can be seen that the leakage current $i_{leak}$ which is a factor of noise may be reduced by suppressing the stray capacitances $C_S$ in the respective parts and the voltage change dv/dt.

The DC power output from the DC power supply 51 is stored in the capacitor $C_1$ of the bidirectional buck-boost chopper 1 to become a waveform of the absolute value of the AC power, and when the power stored to become the waveform of the absolute value of the AC power is at the zero voltage, conduction and shutoff of the switching elements $S_3$, $S_4$, $S_5$, and $S_6$ of the single-phase inverter 3 is controlled, thereby performing switching operations in a state where a voltage change is small. Therefore, a surge voltage or ringing may be suppressed without a sharp change in the voltage output to the load 6. Moreover, since a voltage change between the parts illustrated in Fig. 11 is reduced, leakage current may be suppressed, and it is possible to reduce noise.

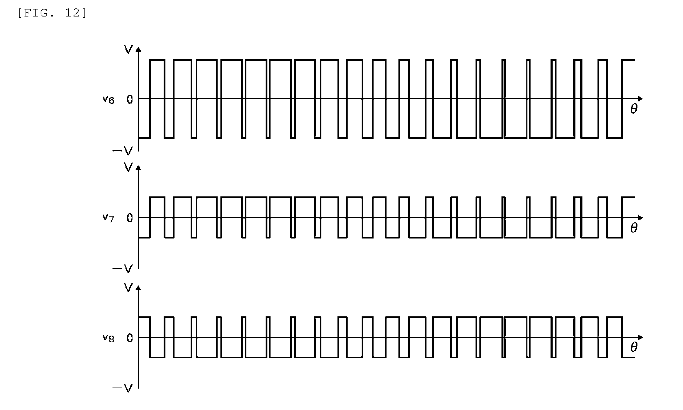

Fig. 12 illustrates voltage waveforms $v_6$, $v_7$, and $v_8$ of corresponding parts of a general power converting apparatus illustrated in Fig. 2. The voltage waveforms $v_6$, $v_7$, and $v_8$ of the corresponding parts are square wave-like voltage waveforms, and sharp voltage changes are repeated. That is, as can be seen from Expression (2), high leakage current flows, resulting in increase in noise.

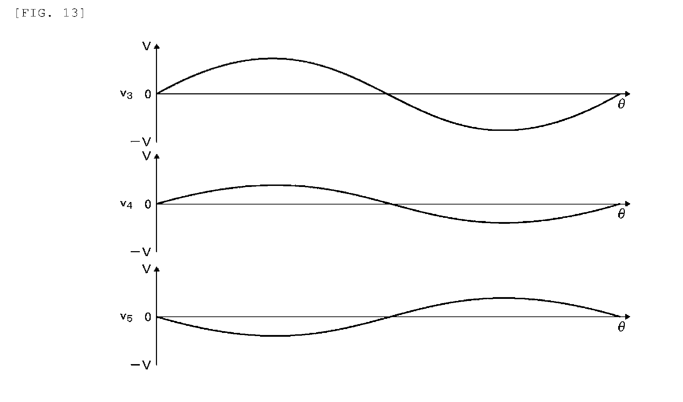

Fig. 13 illustrates voltage waveforms $v_3$, $v_4$, and $v_5$ of corresponding parts of the power converting apparatus that represents the first example of the invention. The voltage waveforms $v_3$, $v_4$, and $v_5$ of the corresponding parts are sine wave-like voltage waveforms, and compared to the voltage waveforms $v_6$, $v_7$, and $v_8$ of the corresponding parts of the general power converting apparatus that converts DC power into AC power, which is illustrated in Fig. 2, a sharp voltage change may be suppressed. Therefore, leakage current may be reduced, and a harmonic component of the output current $i_2$ may be reduced. Therefore, the power converting apparatus that represents the first example of the invention can reduce noise, motor loss, and motor noise.

As described above, since timing of conduction or shutoff is switched in the case where the voltage $v_1$ or the voltage $v_2$ becomes substantially zero, the number of switching operations in the single-phase inverter 3 may be reduced. Moreover, conduction or shutoff is switched in a state where a voltage is rarely applied to the switching elements, and thus reduction in switching loss may be achieved.

In addition, when sine wave-like AC power is to be made only by the single-phase inverter, switching loss is generated due to the number of conduction and shutoff operations of the four switching elements. On the other hand, as in this example, a sine wave-like voltage is generated by the bidirectional buck-boost chopper 1 having the two switching elements. Therefore, switching loss is basically generated due to the number of conduction and shutoff operations of the two switching elements. Therefore, reduction in the number of switching operations and reduction in switching loss in the entire power converting apparatus may be achieved, and thus reduction in power consumption in the entire power converting apparatus may be achieved.

Moreover, the inductor $L_2$ and $L_3$ of the low-pass filter 2 of the power converting apparatus that represents the first example of the invention function as high impedances for a high frequency voltage. That is, the inductor $L_2$ and $L_3$ of the low-pass filter part act as high impedances for a voltage change that occurs at the time of switching of the bidirectional buck-boost chopper, and thus leakage current that flows to the ground G may be suppressed, thereby reducing noise. In addition, a MOSFET or the like other than an IGBT may be applied to each of the switching elements $S_1$ to $S_6$, and a bidirectional buck chopper or the like other than the bidirectional buck-boost chopper 1 may be applied to a DCDC converter.

[Second Example]

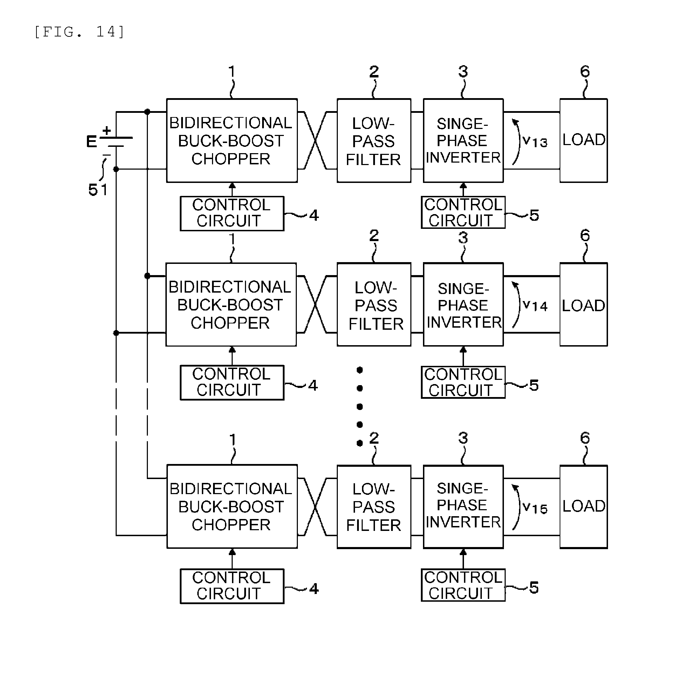

Fig. 14 illustrates a power converting apparatus that represents a second example of the invention, and the power converting apparatus is for operating a plurality of fans and pumps. The power converter that represents the second example of the invention is constituted by connecting a single DC power supply E and a plurality of bidirectional buck-boost choppers, single-phase inverters, and loads in parallel, and like elements that have the same functions as those of the first example illustrated in Fig. 1 are denoted by like reference numerals. Switching of each of the bidirectional buck-boost choppers and each of the single-phase inverter is controlled by each of control circuits 1 and 2 on the basis of each of output voltage commands $v_{15}^*$, $v_{16}^*$, and $v_{17}^*$ and the above-described control order. As a result, output voltages $V_{15}$, $v_{16}$, $v_{17}$ of the respective single-phase inverters may be generated to be sine wave-like, and thus the plurality of fans and pumps may be operated while reducing noise.

[Third Embodiment]

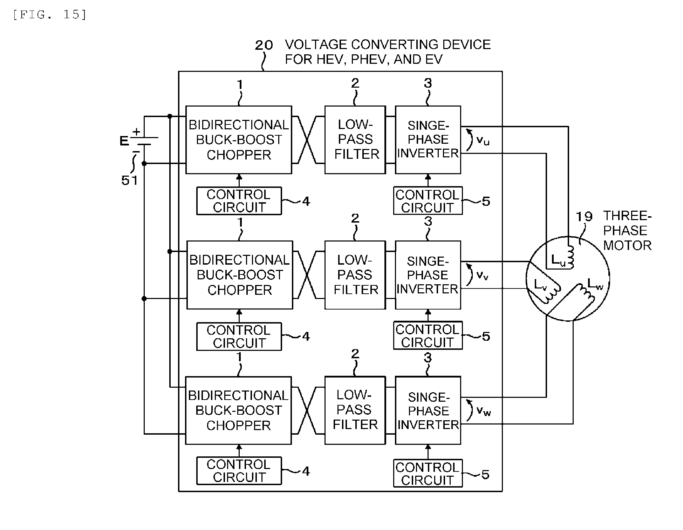

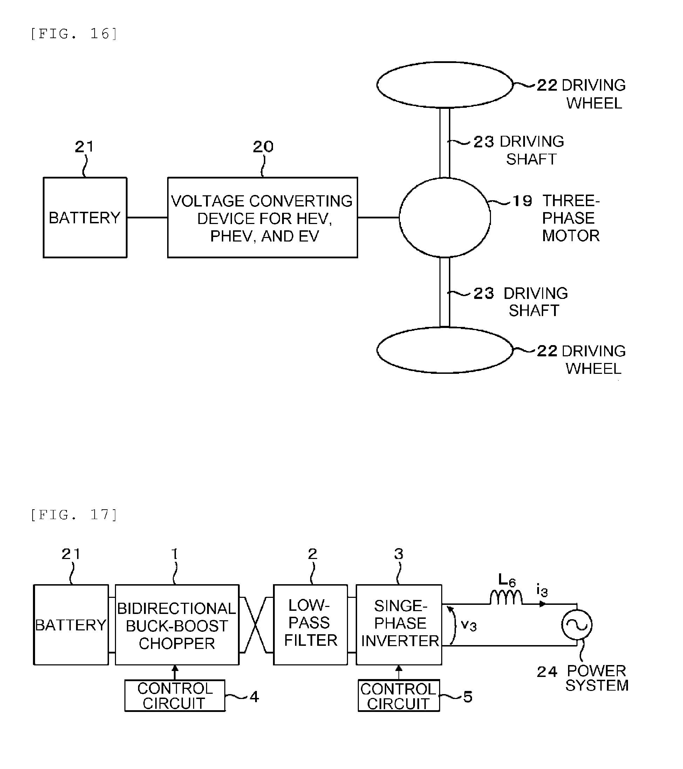

Fig. 15 illustrates a power converting apparatus that represents a third example of the invention, and the power converting apparatus drives a three-phase motor mounted in a hybrid vehicle (hereinafter, "HEV"), a plug-in hybrid vehicle (hereinafter, "PHEV"), or an electric vehicle (hereinafter, "EV"). The power converting apparatus that represents the third example of the invention is constituted by connecting a single DC power supply E, three bidirectional buck-boost choppers, and three single-phase inverters in parallel and respectively connecting the single-phase inverters corresponding UVW phases and windings $L_u$, $L_v$, and $L_w$ of the three-phase motor, and like elements that have the same functions as those of the first example illustrated in Fig. 1 are denoted by like reference numerals. Switching of each of the bidirectional buck-boost choppers and the single-phase inverters for the respective phases is controlled by each of control circuits 1 and 2 on the basis of output voltage commands $v_u^*$, $v_v^*$, and $v_w^*$ having phases shifted by 120 degrees from each other and the above-described control order. As a result, output voltages $v_u$, $v_v$, and $v_w$ of the respective single-phase inverters for the UVW phases are generated to have sine wave waveforms with phases shifted by 120 degrees from each other, thereby driving the three-phase motor. In addition, it can be easily understood that even though a plurality of DC power supplies E are provided, the three-phase motor may be driven. In addition, Fig. 16 illustrates an example of a system schematic diagram in which the power converting apparatus as the third example of the invention is applied to the EV.

[Fourth Example]

Fig. 17 is a power converting apparatus that represents a fourth example of the invention, and the power converting apparatus connects the battery of a PHEV or EV to a power system. The power converting apparatus that represents the fourth example of the invention is a system in which the load part of the power converting apparatus described in the first example is replaced with an inductor $L_6$ for connection and the power system, and like elements that have the same functions are denoted by like reference numerals. As described above, an output voltage $v_3$ of a single-phase inverter may be generated to be sine wave-like, and thus harmonic current that flows into the power system may be suppressed when the battery and the power system are connected. Moreover, transmitting and receiving of power between the battery and the power system may be performed with high efficiency when battery voltage control and power factor control of the output current $i_3$ to 1 are applied to switching control of a bidirectional buck-boost chopper and the single-phase inverter.

By providing the configuration of this example, even when the battery mounted in the PHEV or EV and the power system are connected, inflow of harmonic current due to noise to the power system may be reduced.

According to the invention, the output voltage $v_3$ of the single-phase inverter is generated to be sine wave-like, and switching of the switching elements $S_3$ to $S_6$ of the single-phase inverter is performed every single cycle of the capacitor voltage $v_1$ of the bidirectional buck-boost chopper 1 or the capacitor voltage $v_2$ of the low-pass filter 2 at the time of the zero voltage. Therefore, a surge voltage or ringing that occurs due to switching may be suppressed, and switching loss of the inverter may be reduced. Moreover, by using the low-pass filter 2, each of the inductor $L_2$ and $L_3$ of the low-pass filter part functions as a high impedance for a sharp voltage change that is generated due to switching of the bidirectional buck-boost chopper. Therefore, leakage current that flows to the stray capacitances may further be reduced, noise may be reduced. Furthermore, in a case where the load is a motor, a harmonic component of the load current $i_2$ may be suppressed, and thus motor loss and motor noise may be reduced. Moreover, since leakage current may be reduced by reduction in noise, malfunction of other electronic devices due to leakage current may be prevented, and thus it is possible to provide a power converting apparatus having high reliability.

Reference Signs List

1 bidirectional buck-boost chopper
2 low-pass filter
3 single-phase inverter
4, 5 control circuit
6 load
8 LC filter
50 power converting apparatus
52, 53 output terminal
60, 70 series circuit part
80, 90 phase of single-phase inverter
E DC power supply
$S_1, S_2, S_3, S_4, S_5, S_6$ switching element
$D_1, D_2, D_3, D_4, D_5, D_6$ diode
$L_1, L_2, L_3, L_4, L_5, L_6$ inductor
$C_1, C_2, C_3, C_4$ capacitor
$i_1$ inductor current of bidirectional buck-boost chopper
$i_2, i_3$ output current of single-phase inverter
$v_1$ capacitor voltage of bidirectional buck-boost chopper
$v_2$ capacitor voltage of low-pass filter part
$v_3$ output voltage
$v_4, v_5$ voltage of corresponding part
$v_1^*$ capacitor voltage command
$v_3^*$ output voltage command of single-phase inverter
$\theta$ phase angle of AC voltage

## Claims

1. A power converting apparatus comprising:

   a first inverter circuit connected to a DC power supply side; and
   a second inverter circuit connected to a load side,
   wherein the first inverter circuit converts DC power from the DC power supply into power having an absolute waveform of an AC waveform, and
   the second inverter circuit converts the power of the absolute waveform every single cycle thereof into AC power by alternately inverting the power.

2. The power converting apparatus according to claim 1, further comprising:

   a control circuit which controls the first inverter circuit and the second inverter circuit,
   wherein the second inverter circuit has two series circuits in which an upper arm and a lower arm constituted by switching elements are connected in series, and
   the control circuit performs control to alternately switch conductions of the upper arm and the lower arm of the series circuits every single cycle of the power of the absolute waveform.

3. The power converting apparatus according to claim 1 or 2,
   wherein the first inverter circuit includes a first series circuit portion in which a first switching element and an inductor are connected in series, and a second series circuit portion in which a second switching element and a capacitor are connected in series,
   the second series circuit portion is connected to the inductor of the first series circuit portion in parallel, and
   a voltage of the capacitor is output as a voltage of the absolute wave form by conductions of the first switching element and the second switching element.

4. The power converting apparatus according to claim 2 or 3,

wherein the control circuit alternately switches the conductions of the upper arm and the lower arm included in the second inverter circuit in a case where the voltage of the capacitor becomes substantially 0.

5. The power converting apparatus according to any one of claims 2 to 4, wherein the control circuit calculates, on the basis of an AC command signal for controlling the AC power output to the load, an absolute value command signal that becomes an absolute waveform of the AC command signal, and on the basis of the absolute value command signal, controls the conduction of the first switching element and the second switching element.

6. The power converting apparatus according to any one of claims 2 to 5, wherein the control circuit controls so that a conduction width in which an upper arm and a lower arm included in the first inverter circuit conduct is controlled to be half a cycle of the AC command signal.

7. The power converting apparatus according to any one of claims 2 to 6, wherein the first inverter circuit is connected to the second inverter circuit via a filter circuit constituted by a capacitor and an inductor.

8. The power converting apparatus according to any one of claims 1 to 7, wherein the load is a motor, and the load and the second inverter circuit are short circuited to the same housing.

9. A power converting system comprising:

a plurality of the power converting apparatuses according to any one of claims 1 to 8, wherein power supplies which supply DC power to the first inverter circuit are the same power supply.

10. A motor system comprising:

the power converting apparatus according to claim 8, wherein the motor is a three-phase motor, and the three power converting apparatuses are included to correspond to respective phases of the three-phase motor.

11. A power converting apparatus comprising:

a first inverter circuit which is constituted by a plurality of switching elements and receives DC power; a second inverter circuit which is constituted by a plurality of switching elements and outputs AC power to a load; and a control circuit which controls the first inverter circuit and the second inverter circuit, wherein the first inverter circuit has a first series circuit portion in which a first switching element and an inductor are connected in series, and a second series circuit portion in which a capacitor and the inductor are connected in series via a second switching element, the control circuit calculates, on the basis of an AC command signal for controlling the AC power output to the load, an absolute value command signal that becomes an absolute value of the AC command signal, and on the basis of the absolute value command signal, controls conduction and shutoff of the first switching element and the second switching element to store a voltage in the capacitor, and on the basis of the voltage stored in the capacitor, conduction and shutoff of a plurality of switching elements included in the second inverter circuit is controlled.

[FIG. 1]

[FIG. 2]

[FIG. 3]

[FIG. 4]

[FIG. 5]

[FIG. 6]

[FIG. 7]

(a)

(b)

(c)

(d)

[FIG. 8]

[FIG. 9]

[FIG. 10]

[FIG. 11]

[FIG. 12]

[FIG. 13]

[FIG. 14]

[FIG. 15]

**20** VOLTAGE CONVERTING DEVICE FOR HEV, PHEV, AND EV

**19** THREE-PHASE MOTOR

[FIG. 16]

**21** BATTERY

**20** VOLTAGE CONVERTING DEVICE FOR HEV, PHEV, AND EV

**22** DRIVING WHEEL

**23** DRIVING SHAFT

**19** THREE-PHASE MOTOR

**23** DRIVING SHAFT

**22** DRIVING WHEEL

[FIG. 17]

**21** BATTERY

**1** BIDIRECTIONAL BUCK-BOOST CHOPPER

**2** LOW-PASS FILTER

**3** SINGE-PHASE INVERTER

$L_6$  $i_3$

$v_3$

**24** POWER SYSTEM

CONTROL CIRCUIT ~**4**

CONTROL CIRCUIT ~**5**

<table>
<tr><td colspan="2" align="center">**INTERNATIONAL SEARCH REPORT**</td><td>International application No.<br>PCT/JP2010/007537</td></tr>
</table>

A. CLASSIFICATION OF SUBJECT MATTER
*H02M7/48(2007.01)i*

According to International Patent Classification (IPC) or to both national classification and IPC

B. FIELDS SEARCHED

Minimum documentation searched (classification system followed by classification symbols)
H02M7/48

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2008-220001 A (Honda Motor Co., Ltd.),<br>18 September 2008 (18.09.2008),<br>paragraphs [0077] to [0081]; fig. 6 to 8<br>(Family: none) | 1-11 |
| Y | JP 2000-116120 A (Fuji Electric Co., Ltd.),<br>21 April 2000 (21.04.2000),<br>entire text; fig. 10<br>(Family: none) | 1-11 |
| Y | JP 11-299264 A (Yugen Kaisha System Giken),<br>29 October 1999 (29.10.1999),<br>entire text; fig. 1 to 6<br>(Family: none) | 7 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28 March, 2011 (28.03.11) | Date of mailing of the international search report<br>05 April, 2011 (05.04.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/007537

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-311697 A (Hitachi, Ltd.),<br>09 November 2006 (09.11.2006),<br>entire text; fig. 1 to 7<br>& US 2006/0244401 A1 & US 2010/0090630 A1<br>& EP 1724911 A2 | 8 |
| Y | JP 2000-166251 A (Fuji Electric Co., Ltd.),<br>16 June 2000 (16.06.2000),<br>entire text; fig. 1 to 15<br>(Family: none) | 9-10 |
| A | JP 2009-254196 A (Honda Motor Co., Ltd.),<br>29 October 2009 (29.10.2009),<br>entire text; fig. 1 to 9<br>(Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000295857 A